(19) Europäisches Patentamt
European Patent Office
Office européen des brevets

(11) **EP 1 821 009 B1**

(12) **EUROPÄISCHE PATENTSCHRIFT**

(45) Veröffentlichungstag und Bekanntmachung des Hinweises auf die Patenterteilung:
**04.05.2011 Patentblatt 2011/18**

(51) Int Cl.:
**F16J 15/34** *(2006.01)*

(21) Anmeldenummer: **07002679.4**

(22) Anmeldetag: **08.02.2007**

(54) **Prüfvorrichtung zur Erfassung der Dampfemission an wenigstens einer Leckagestelle, vorzugsweise bei Gleitringdichtungen, insbesondere im automotiven Bereich**

Test device for recording the vapour emission at least at one leakage point, especially for slide ring seals, in particular in the field of automation

Dispositif de vérification destiné à l'enregistrement de l'émission de vapeur au niveau d'au moins un endroit de fuite, de préférence dans les joints glissants, en particulier dans le domaine automobile

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **17.02.2006 DE 102006008463**

(43) Veröffentlichungstag der Anmeldung:
**22.08.2007 Patentblatt 2007/34**

(73) Patentinhaber: **KACO GmbH + Co. KG
74072 Heilbronn (DE)**

(72) Erfinder:
• **Hoffmann, Tobias
74906 Bad Rappenau (DE)**

• **Gwinner, Gerhard
74076 Heilbronn (DE)**
• **Ogaza, Eckhard
74182 Obersulm (DE)**

(74) Vertreter: **Jackisch-Kohl, Anna-Katharina
Patentanwälte
Jackisch-Kohl & Kohl
Stuttgarter Strasse 115
70469 Stuttgart (DE)**

(56) Entgegenhaltungen:
**DE-A- 19 724 308**

EP 1 821 009 B1

**Beschreibung**

Die Erfindung betrifft eine Prüfvorrichtung zur Erfassung der Dampfemission an wenigstens einer Lekkagestelle, vorzugsweise bei Gleitringdichtungen, insbesondere im automotiven Bereich, nach dem Oberbegriff des Anspruches 1.

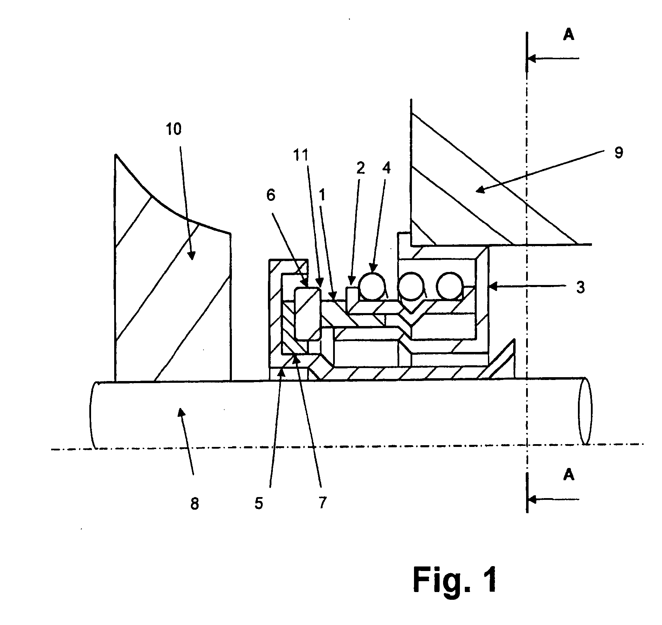

Im automotiven Bereich werden Wasserpumpen eingesetzt, deren Wellen zum statischen Wasserpumpengehäuse durch Gleitringdichtungen abgedichtet werden. Fig. 1 zeigt eine solche Wasserpumpe mit einer Gleitringdichtung, die einen Gleitring 1, einen Balg 2, ein Dichtungsgehäuse 3, eine Druckfeder 4, eine Halterung 5, einen Gegenring 6 und eine Manschette 7 aufweist. Der Gegenring 6 wird mit der Manschette 7 in der Halterung 5 befestigt. Die Halterung 5 sitzt drehfest auf der abzudichtenden Pumpenwelle 8, auf der mit Abstand vom Pumpengehäuse 9 ein Flügelrad 10 drehfest sitzt. Der Gleitring 1 liegt unter der Kraft des Balges 2 und der Druckfeder 4 am Gegenring 6 dichtend an. Zwischen dem Gleitring 1 und dem Gegenring 6 wird ein Dichtspalt 11 gebildet, der mehr oder weniger groß ist. Dieser Dichtspalt 11 ist typischerweise mit einem im Kühlsystem enthaltenen Gemisch aus Wasser und Kühl/Frostschutzmittel gefüllt. Dieses Medium im Dichtspalt 11 ist notwendig, damit die Gleitpartner 1, 6 im Betrieb gekühlt werden und die Reibung minimiert wird. Da es während des Betriebes eines Fahrzeuges durch die entstehende Wärme im Dichtspalt 11 zum teilweisen Verdampfen des Gemisches kommt, wird eine durchschnittliche Dampfemission für eine Gleitringdichtung von der Automobilindustrie bis zu einer Menge von 300 mg/h toleriert. Ein übermäßiger Verlust des Gemisches verringert die Kühlleistung des Kühlsystems und erhöht somit die Gefahr eines Motorschadens. Der Verlust an Kühlmittel stellt auch eine Belastung für die Umwelt dar. Um diesen Kühlmittelverlust so gering wie möglich zu halten, wären ein Wartungsaufwand und somit Kosten für den Betreiber erforderlich.

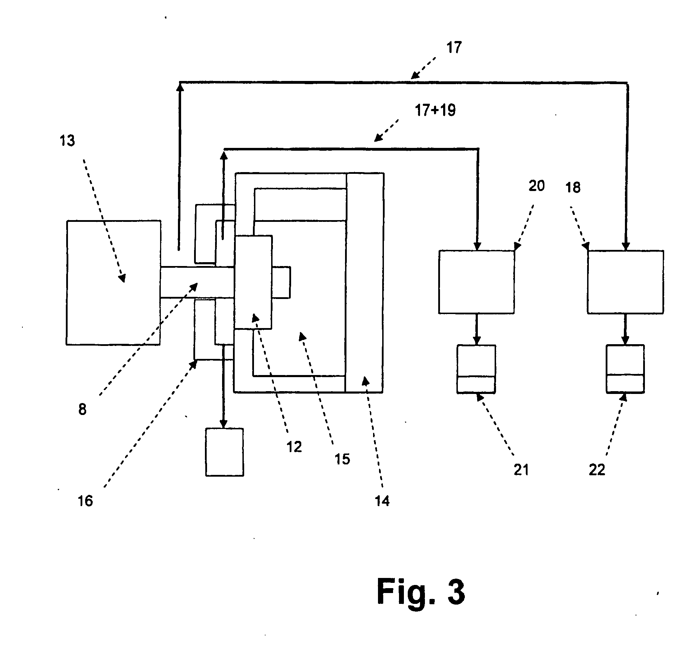

Aus diesem Grunde muss die Menge der Dampfemission gemessen werden. Dies wird durch die Messung der in der Luft enthaltenen Feuchte durchgeführt. Eine bekannte Prüfvorrichtung hierfür zeigt Fig. 3. Die zu prüfende Gleitringdichtung 12 sitzt auf der Pumpenwelle 8, die durch einen Elektromotor 13 drehbar angetrieben wird. Die Prüfvorrichtung hat einen Prüfkopf 14, in dem sich das abzudichtende Medium 15 befindet. Die Welle 8 ragt durch eine Abdeckung 16, die am Prüfkopf 14 vorgesehen ist und die Gleitringdichtung 12 überdeckt. Zur Prüfung der Dampfemission der Gleitringdichtung 12 wird mit einer Pumpe ein Referenzstrom 17 durch einen Kondensator 18 geleitet. Außerdem wird die Referenzluft 17 zusammen mit der Dampfemission 19, die an der Gleitringdichtung 12 auftritt, einem weiteren Kondensator 20 mittels der Pumpe zugeführt. In den Kondensatoren 18, 20 wird die Referenzluft 17 bzw. das Gemisch 17, 19 aus Referenzluft und Dampfemission heruntergekühlt. Die Kühlung der Kondensatoren 18, 20 erfolgt durch Peltierelemente. Infolge der Kühlung kann die Luft weniger Wasser aufnehmen, so dass Wasser im Kondensator 18, 20 als Kondensat ausfällt. Es läuft im Kondensator 18, 20 ab und wird in darunter installierten Behältern 21, 22 gesammelt. Die Kondensatmengen können nach Beendigung des Prüflaufs gewogen und die Menge des aus der Referenzluft 17 stammenden Kondensats von der Menge des aus dem Gemisch 17, 19 gebildeten Kondensats abgezogen werden. Die Differenz ergibt die Leckagemenge, die ein Maß für die Dampfemission der Gleitringdichtung 12 ist.

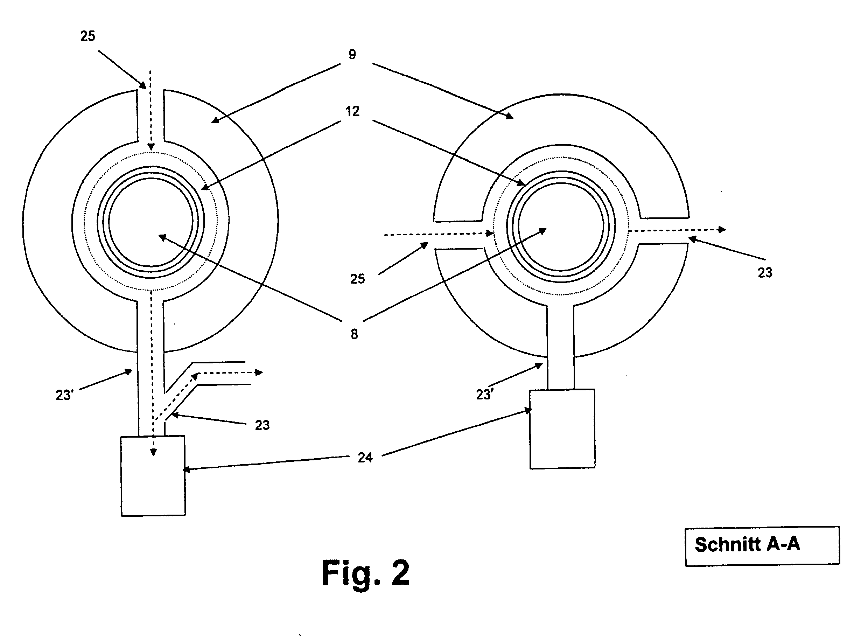

Das Wasserpumpengehäuse 9 weist, wie Fig. 2 zeigt, eine Zuluftbohrung 25 für die Messung auf. Über sie wird die zur Leckagestelle strömende Druckluft geleitet. Diametral gegenüberliegend ist eine weitere Bohrung 23 vorgesehen, über die die Luft hinter der Leckagestelle an der Gleitringdichtung abströmt. Der Messgasstrom wird durch die Bohrung 25 zugeführt. Das Messgas strömt ringförmig um die Welle 8 und an der Dichtung 12 entlang. Der Messgasstrom wird dann durch die Bohrung 23 von der Leckagestelle weggeleitet. Die Flüssigleckage strömt nach unten in ein Behältnis 24.

Fig. 2 zeigt zwei Möglichkeiten, wie das Messgas geleitet wird. Bei der linken Ausführungsform ist die Bohrung 25 vertikal angeordnet. Die Bohrung 23 zweigt von einer Bohrung 23' ab, die fluchtend zur Bohrung 25 liegt und die an das Behältnis 24 angeschlossen ist. Über die Bohrung 23' gelangt die Flüssigleckage in das Behältnis 24. In der Bohrung 23 wird der Messgasstrom weitergeleitet.

Bei der rechten Ausführungsform von Fig. 2 liegen die Bohrungen 23, 25 horizontal, während die zum Behältnis 24 führende Bohrung 23' im Bereich zwischen den Bohrungen 23, 25 nach unten verläuft.

Dieses Messsystem mit den Kondensatoren 18, 20 hat den Nachteil, dass durch sich ändernde Umweltbedingungen, wie die Raumtemperatur oder die Feuchte im Raum, die Fähigkeit des Kondensators verändert wird, ausreichend Kondensat zu bilden. Die durch die Peltierelemente der Kondensatoren erbrachte Kühlleistung kann sich nicht auf die ändernden Umgebungsbedingungen einstellen. Die Messgenauigkeit wird auch durch das im Kondensator 18, 20 nicht ablaufende Kondensat beeinflusst, das mit Pressluft zu den Behältern 20, 21 geblasen werden muss. Außerdem muss die Messdauer wenigstens 24 Stunden betragen, um ein messbares Ergebnis zu erreichen. Im Hinblick auf eine Optimierung und Entwicklung von Gleitringdichtungen ist besonders nachteilig, dass bei einer solchen Langzeitmessung keine Aussage über den Verlauf der Leckageentstehung gemacht werden kann. Es lässt sich nicht feststellen, ob die Leckage gleichmäßig über die Messzeit entstanden ist oder ob die Leckagemenge sich während der Messzeit geändert hat.

Bei einer bekannten Prüfvorrichtung (DE 197 24 308 A) wird eine Gleitringdichtung während des Betriebes durch vier Sensoren erfasst, mit denen die Mediumstemperatur an der Dichtung, der Mediumsdruck an der Dichtung, der Leckagedruck sowie die Gegenringtemperatur im Bereich der Gleitfläche erfasst werden. Die Messwerte der Sensoren werden mit bekannten Vergleichswerten verglichen. Aus der Abweichung der gemessenen Werte von den bekannten Vergleichswerten wird die Ausfallwahrscheinlichkeit und/oder die verbleibende Restlebensdauer errechnet.

Der Erfindung liegt die Aufgabe zugrunde, die gattungsgemäße Prüfvorrichtung so auszubilden, dass eine Leckagestelle in einfacher Weise zuverlässig hinsichtlich des Leckageverlustes erfasst werden kann.

Diese Aufgabe wird bei der gattungsgemäßen Prüfvorrichtung erfindungsgemäß mit den kennzeichnenden Merkmalen des Anspruches 1 gelöst.

Bei der erfindungsgemäßen Prüfvorrichtung sind die beiden Messeinheiten bezüglich eines Messgasstromes in Reihe geschaltet. Die eine Messeinheit befindet sich vor und die andere Messeinheit hinter der zu prüfenden Leckagestelle. Die vor der Leckagestelle befindliche Messeinheit liefert als charakteristischen Messwert die relative Feuchte und die Temperatur des Messgasstromes als Referenzwerte. Die hinter der Leckagestelle befindliche Messeinheit erfasst die relative Feuchte und die Temperatur des Messgasstromes zuzüglich einer Dampfemission der Leckagestelle. Ein Vergleich der Messwerte der beiden Messeinheiten ergibt das Maß der Dampfemission der Leckagestelle. Die beiden Messeinheiten liefern die Messwerte vorteilhaft kontinuierlich, so dass die Leckageentstehung über die Zeit genau festgehalten wird. So können genaue Aussagen darüber gemacht werden, ob die Leckagestelle über die Messzeit gleichmäßig oder ungleichmäßig erfolgt.

Weitere Merkmale der Erfindung ergeben sich aus den weiteren Ansprüchen, der Beschreibung und den Zeichnungen.

Die Erfindung wird anhand eines in den Zeichnungen dargestellten Ausführungsbeispieles näher erläutert. Es zeigen

Fig. 1 in schematischer Darstellung und im Axialschnitt eine Hälfte einer Gleitringdichtung, die auf einer Welle einer Wasserpumpe sitzt,

Fig. 2 in einem Schnitt längs der Linie A-A in Fig. 1 zwei Ausführungsformen von Wasserpumpen,

Fig. 3 in schematischer Darstellung eine Prüfvorrichtung zur Erfassung der Dampfemission nach dem Stand der Technik,

Fig.4 in schematischer Darstellung eine erfindungsgemäße Prüfvorrichtung zur Erfassung der Dampfemission,

Fig. 5 in schematischer Darstellung die Komponenten der Prüfvorrichtung gemäß Fig. 4.

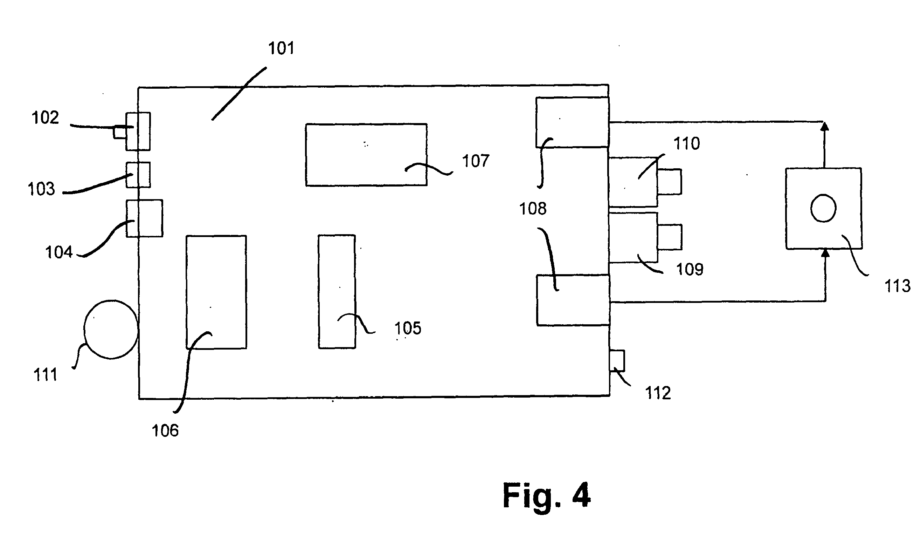

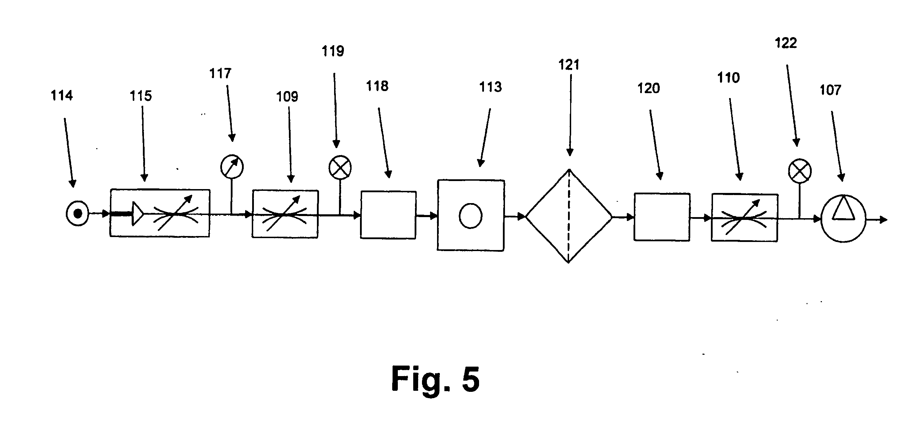

Mit der Prüfvorrichtung gemäß den Fig. 4 und 5 läßt sich die Dämpfemission, vorzugsweise bei Gleitringdichtungen, insbesondere im automotiven Bereich, zuverlässig und genau erfassen. Die Prüfvorrichtung zeichnet sich durch einen einfachen Meßaufbau aus, kann kostengünstig hergestellt werden und weist einen ausreichenden Meßbereich sowie eine ausreichend hohe Meßgenauigkeit auf. Die Prüfvorrichtung ist vorteilhaft mobil einsetzbar und erlaubt eine kontinuierliche Messung der Dampfemission. Mit der Prüfvorrichtung ist auch eine Online-Messung möglich. Die Messung der Dampfemission kann mit hoher Genauigkeit unabhängig von Umgebungsbedingungen, wie Temperatur, Raumfeuchte und dergleichen, erfolgen. Da eine Gleitringdichtung auch eine Flüssigleckage haben kann, ist die Prüfvorrichtung so ausgebildet, daß mit ihr die Flüssigleckage und die Dampfleckage getrennt gemessen werden können.

Die Prüfvorrichtung hat ein Gehäuse 101, das einen Netzanschluß 102 aufweist, der vorteilhaft mit einem Schalter versehen ist. An der gleichen Seite des Gehäuses 1 befinden sich zwei Stecker 103, 104 für Meßzellen, mit denen die Raumfeuchte sowie die Temperatur gemessen werden kann. Im Gehäuse 1 befindet sich eine Stromversorgung 105, eine Klemmleiste 106, eine Pumpe 107 und zwei Sensoraufnahmen 108. An der Außenseite des Gehäuses 101 befinden sich zwei Durchflußmeßgeräte 109, 110, mit denen in noch zu beschreibender Weise die zuströmende und die abströmende Luftmenge gemessen werden.

Am Gehäuse 101 ist eine Halterung 111 für einen Filter, vorzugsweise einen Aktivkohlefilter, vorgesehen. Schließlich ist das Gehäuse 1 mit einem Druckluftanschluß 112 versehen.

Die Prüfvorrichtung mit dem Gehäuse 101 ist kompakt ausgebildet und enthält alle für den im folgenden beschriebenen Prüfvorgang notwendigen Komponenten. Mit dieser Prüfvorrichtung ist eine Prüfung an Ort und Stelle problemlos möglich.

Anhand von Fig. 5 wird das mit der Prüfvorrichtung durchgeführte Prüfverfahren im einzelnen erläutert. Mit 113 ist die Leckagestelle der Gleitringdichtung gekennzeichnet, an der eine Dampfemission auftritt, wie anhand der Fig. 1 bis 3 erläutert worden ist. Eine Druckluftquelle 114, die an den Druckluftanschluß 112 des Gehäuses 101 angeschlossen wird, erzeugt einen Druckluftstrom, der in Richtung auf die Leckagestelle 113 geleitet wird. Die von der Druckluftquelle 114 ausgehende Druckluft gelangt zunächst zu einem Druckminderventil 115, mit dem der Druck der Druckluft auf ein verträgliches Maß herabgesetzt wird. Die Druckluft gelangt dann zum Durchflußmeßgerät 109, das sich in Strömungsrichtung der Druckluft vor der Leckagestelle 113 befindet. In der Druckluftleitung 116 zwischen dem Druckminderventil 115 und dem Durchflußmeßgerät 109 sitzt ein Manometer 117, mit dem der Druck der Druckluft vor dem Zutritt zum Durchflußmeßgerät 109 gemessen werden kann. Sollte der Druck zu hoch sein, kann ein entsprechendes Signal an das Druckminderventil 115 gesandt werden, um den Druck in entsprechendem Maße zu verringern.

Es ist aber auch möglich, mittels dieses Signals die Zuführung der Druckluft zum Durchflußmeßgerät 109 zu unterbrechen.

Dem Durchflußmeßgerät 109 nachgeschaltet ist ein erster Feuchte/Temperatursensor 118, der vor der Leckagestelle 113 die zuströmende Luft hinsichtlich Raumfeuchte und Temperatur mißt. Die mit diesem Sensor 118 gemessenen Werte bilden die Referenzwerte für den Meßvorgang.

Im Bereich zwischen dem Durchflußmeßgerät 109 und dem Sensor 118 ist eine Anzeige 119 vorgesehen, die einen ordnungsgemäßen Durchfluß der Druckluft vom Durchflußmeßgerät 109 zum Sensor 118 anzeigt. Vorzugsweise ist die Anzeige 119 Teil des Durchflußmeßgerätes 109 und kann, abweichend vom dargestellten Ausführungsbeispiel, auch nach dem Sensor 118 vorgesehen sein.

In Strömungsrichtung hinter der Leckagestelle 113 befindet sich ein zweiter Sensor 120, mit dem die Raumfeuchte und die Temperatur des von der Leckagestelle 113 abgehenden Luftstromes ermittelt wird. Um den zweiten Sensor 120 vor dem negativen Einfluß von das Meßergebnis eventuell verfälschenden Bestandteilen im Meßgas zu schützen, ist dem Sensor 120 wenigstens ein Filter 121, vorzugsweise ein Aktivkohlefilter, vorgeschaltet. Wird, wie im Ausführungsbeispiel, die Gleitringdichtung an einer Wasserpumpe auf Leckage geprüft, dann kann sich in der aus der Leckagestelle 113 strömenden Luft Glykol befinden, das im Filter 121 zuverlässig zurückgehalten wird. Die aus der Leckagestelle 113 strömende Luft besteht anteilig aus der von der Druckluftquelle 114 kommenden Druckluft und der Dampfemission. Dementsprechend erfaßt der Sensor 120 die Raumfeuchte und die Temperatur dieses Gemisches.

Um im optimalen Arbeitsbereich des Filters 121 zu liegen, wird vorteilhaft vorkonditionierte Druckluft, das heißt entölte und getrocknete Druckluft, als zuströmendes Gas verwendet.

Dem Sensor 120 ist das Durchflußmeßgerät 110 nachgeschaltet, mit dem ebenso wie mit dem Durchflußmeßgerät 109 die Luftmenge geregelt werden kann. Kann beispielsweise die Dichtheit einzelner Systemkomponenten, insbesondere der Wasserpumpe, nicht gewährleistet werden, ist es wichtig, eine höhere Zuluftmenge als Abluftmenge zu wählen und damit die Zuströmung von Raumluft durch einen geringen Überdruck im System zu vermeiden. Mit den beiden Durchflußmeßgeräten 109, 110 läßt sich dies problemlos durchführen, indem die Geräte so eingestellt werden, daß das Durchflußmeßgerät 109 eine größere Menge an Druckluft der Leckagestelle 113 zuströmen läßt. Da durch die Druckluft in Bereichen zwischen etwa 5 und etwa 25% relative Feuchte gemessen werden soll, würde zuströmende Raumluft das Ergebnis deutlich verfälschen.

Dem Durchflußmeßgerät 110 ist ebenfalls eine Anzeige 122 zugeordnet, die anzeigt, ob durch das Durchflußmeßgerät 110 die Druckluft strömt. Die Anzeige 122 ist vorteilhaft Teil des Durchflußmeßgerätes 110. Sie kann auch im Bereich zwischen der Leckagestelle 113 und dem Durchflußmeßgerät 110 angeordnet sein.

Die beiden Sensoren 118, 120 sind in den Sensoraufnahmen 108 untergebracht. In der in Fig. 4 unteren Sensoraufnahme 108 sitzt der Sensor 118, der in Strömungsrichtung vor der Leckagestelle 113 angeordnet ist. In der in Fig. 4 oberen Sensoraufnahme 108 sitzt der hinter der Leckagestelle 113 befindliche Sensor 120.

Die Pumpe 107 wird vorteilhaft erst dann eingeschaltet, wenn die Dichtheit der Systemkomponenten, insbesondere der Wasserpumpe, nicht gewährleistet ist. In diesem Falle erzeugt die Druckluftquelle 114 Druck, während die Pumpe 107 die Druckluft anzieht. Dadurch tritt an der Undichtheitsstelle des Gesamtsystems nur minimal Luft aus. Ist das Gesamtsystem hingegen dicht, dann muß die Pumpe 107 nicht eingeschaltet werden; dann reicht es aus, mittels der Druckluftquelle 114 die Druckluft zuzuführen.

Bei einer einfacheren Ausführungsform ist das zweite Durchflußmeßgerät 110 hinter der Leckagestelle 113 nicht vorgesehen. Dies ist dann möglich, wenn das Durchflußvolumen der Druckluft durch die Prüfvorrichtung als konstant angenommen wird.

Die Feuchtigkeitsmenge in der abströmenden Luft kann nach der Beziehung

$$p \bullet V = m \bullet R \bullet T$$

berechnet werden. Aus dieser Gleichung ergibt sich:

$$m = \frac{p \bullet V}{R \bullet T}$$

Der jeweilige Druck läßt sich bestimmen nach

$$p = rF \bullet p_s$$

Hierbei bedeuten:

rF = relative Feuchte
$p_s$ = Sättigungs/Dampfdruck

Unter Berücksichtigung dieser Beziehung ergibt sich für die Feuchtigkeitsmenge

$$m = \frac{rF \bullet p_s \bullet V}{R \bullet T}$$

Der Sättigungs/Dampfdruck $p_s$ ist temperaturabhängig. Darum können in einer Tabelle Temperaturwerte T entsprechenden Sättigungs/Dampfdruckwerten $p_s$ zugeordnet werden.

Mit der beschriebenen Prüfvorrichtung läßt sich einfach und dennoch genau die Menge der Dampfemission durch die beschriebene Differenzmessung der in der Druckluft enthaltenen Feuchte bestimmen. Die von den beiden Sensoren 118, 120 ermittelten Meßwerte werden vorteilhaft einem (nicht dargestellten) Rechner zugeführt, der aus einem Vergleich der ermittelten Werte die Feuchtigkeitsmenge und damit die Dampfemission zuverlässig bestimmen kann. Mit den Durchflußmeßgeräten 109, 110 läßt sich die Durchflußmenge optimal regeln, so daß eine sehr genaue Messung gewährleistet ist.

Die Prüfvorrichtung wird vorteilhaft zur Messung der Leckage von Gleitringdichtungen im automotiven Bereich eingesetzt. Mit der Prüfvorrichtung kann aber beispielsweise auch die Feuchte in einer Atmosphäre gemessen werden, die etwa organische oder anorganische Anteile enthält.

**Patentansprüche**

1. Prüfvorrichtung zur Erfassung der Dampfemission an wenigstens einer Leckagestelle (113), vorzugsweise bei Gleitringdichtungen, insbesondere im automotiven Bereich, mit wenigstens einer Messeinheit (118) vor und wenigstens einer Messeinheit (120) nach der Leckagestelle (113), **dadurch gekennzeichnet, dass** die beiden Messeinheiten (118, 120) bezüglich eines Messgasstromes in Reihe geschaltet sind, von denen die Messeinheit (118) vor der Leckagestelle (113) die relative Feuchte (rF) und die Temperatur des Messgasstromes als Referenzwert und die Messeinheit (120) hinter der Leckagestelle (113) die relative Feuchte und die Temperatur des Messgasstromes zuzüglich einer Dampfemission der Leckagestelle (113) erfasst.

2. Prüfvorrichtung nach Anspruch 1, **dadurch gekennzeichnet, dass** die Messwerte der beiden Messeinheiten (11B, 120) einem Rechner zugeführt werden.

3. Prüfvorrichtung nach Anspruch 1 oder 2, **dadurch gekennzeichnet, dass** der ersten Messeinheit (118) ein Durchflussmesser (109) vor- oder nachgeschaltet ist.

4. Prüfvorrichtung nach einem der Ansprüche 1 bis 3, **dadurch gekennzeichnet, dass** der zweiten Messeinheit (120) ein Durchflussmesser (110) vor- oder nachgeschaltet ist.

5. Prüfvorrichtung nach einem der Ansprüche 1 bis 4, **dadurch gekennzeichnet, dass** der Messgasstrom durch Druckluft gebildet ist.

6. Prüfvorrichtung nach einem der Ansprüche 1 bis 5, **dadurch gekennzeichnet, dass** die Prüfvorrichtung wenigstens einen Druckluftanschluss (112) aufweist.

7. Prüfvorrichtung nach einem der Ansprüche 1 bis 6, **dadurch gekennzeichnet, dass** der ersten Messeinheit (118) ein Druckminderer (115) vorgeschaltet ist.

8. Prüfvorrichtung nach Anspruch 7, **dadurch gekennzeichnet, dass** sich der Druckminderer (115) zwischen der Druckluftquelle und der ersten Messeinheit (118) befindet.

9. Prüfvorrichtung nach einem der Ansprüche 1 bis 8, **dadurch gekennzeichnet, dass** der ersten oder der zweiten Messeinheit (118, 120) ein Filter (121) vorgeschaltet ist.

10. Prüfvorrichtung nach einem der Ansprüche 1 bis 9, **dadurch gekennzeichnet, dass** sie mit einer Pumpe (107) versehen ist.

11. Prüfvorrichtung nach einem der Ansprüche 1 bis 10, **dadurch gekennzeichnet, dass** die Messeinheiten (118, 120) einen Feuchtesensor sowie ein Thermoelement aufweisen.

**Claims**

1. A test device for recording the vapour emission at at least one leakage site (113), preferably in the case of axial face seals, in particular in the automotive field, having at least one measuring unit (118) before the leakage site (113) and at least one measuring unit (120) after the leakage site (113), **characterised in that** the two measuring units (118, 120) are connected in series with respect to a measuring gas stream, the measuring unit (118) before the leakage site (113) recording the relative moisture (rF) and the temperature of the measuring gas stream as a reference value and the measuring unit (120) after the leakage site (113) recording the relative moisture and the temperature of the measuring gas stream plus a vapour emission of the leakage site (113).

2. A test device according to claim 1, **characterised in that** the measured values of the two measuring units (118, 120) are supplied to a computer.

3. A test device according to claim 1 or 2, **characterised in that** a flowmeter (109) is connected upstream or downstream of the first measuring unit (118).

4. A test device according to any one of claims 1 to 3, **characterised in that** a flowmeter (110) is connected upstream or downstream of the second measuring unit (120).

5. A test device according to any one of claims 1 to 4, **characterised in that** the measuring gas stream is formed by compressed air.

6. A test device according to any one of claims 1 to 5, **characterised in that** the test device has at least one compressed-air connection (112).

7. A test device according to any one of claims 1 to 6, **characterised in that** a pressure reducer (115) is connected upstream of the first measuring unit (118).

8. A test device according to claim 7, **characterised in that** the pressure reducer (115) is located between the compressed-air source and the first measuring unit (118).

9. A test device according to any one of claims 1 to 8, **characterised in that** a filter (121) is connected upstream of the first or the second measuring unit (118, 120).

10. A test device according to any one of claims 1 to 9, **characterised in that** it is provided with a pump (107).

11. A test device according to any one of claims 1 to 10, **characterised in that** the measuring units (118, 120) have a moisture sensor as well as a thermocouple.

## Revendications

1. Dispositif de contrôle destiné à relever l'émission de vapeur au niveau d'au moins une zone de fuite (113) , de préférence dans le cas de garnitures d'étanchéité à anneau glissant, et notamment dans le domaine automobile, le dispositif comprenant au moins une unité de mesure (118) avant, et au moins une unité de mesure (120) après la zone de fuite (113),
**caractérisé en ce que** les deux unités de mesure (118, 120) sont montées en série relativement à un écoulement de gaz de mesure, l'unité de mesure (118) située avant la zone de fuite (113) relevant l'humidité relative (rF) et la température de l'écoulement de gaz de mesure en tant que valeur de référence, et l'unité de mesure (120) située après la zone de fuite (113) relevant l'humidité relative et la température de l'écoulement de gaz de mesure et en sus une émission de vapeur de la zone de fuite (113).

2. Dispositif de contrôle selon la revendication 1, **caractérisé en ce que** les valeurs de mesure des deux unités de mesure (118, 120) sont transmises à un calculateur.

3. Dispositif de contrôle selon la revendication 1 ou la revendication 2,
**caractérisé en ce qu'**un débitmètre (109) est monté en amont ou en aval de la première unité de mesure (118).

4. Dispositif de contrôle selon l'une des revendications 1 à 3,
**caractérisé en ce qu'**un débitmètre (110) est monté en amont ou en aval de la deuxième unité de mesure (120).

5. Dispositif de contrôle selon l'une des revendications 1 à 4,
**caractérisé en ce que** l'écoulement de gaz de mesure est formé par de l'air comprimé.

6. Dispositif de contrôle selon l'une des revendications 1 à 5,
**caractérisé en ce que** le dispositif de contrôle comprend au moins un raccord de branchement d'air comprimé (112).

7. Dispositif de contrôle selon l'une des revendications 1 à 6,
**caractérisé en ce qu'**un détenteur ou réducteur de pression (115) est monté en amont de la première unité de mesure (118).

8. Dispositif de contrôle selon la revendication 7, **caractérisé en ce que** le détendeur (115) se trouve entre la source d'air comprimé et la première unité de mesure (118) .

9. Dispositif de contrôle selon l'une des revendications 1 à 8,
**caractérisé en ce qu'**un filtre (121) est monté en amont de la première ou de la deuxième unité de mesure (118, 120).

10. Dispositif de contrôle selon l'une des revendications 1 à 9,
**caractérisé en ce qu'**il est doté d'une pompe (107).

11. Dispositif de contrôle selon l'une des revendications 1 à 10,
**caractérisé en ce que** les unités de mesure (118, 120) comprennent un détecteur d'humidité ainsi qu'un thermocouple.

Fig. 1

**Fig. 2**

Schnitt A-A

EP 1 821 009 B1

Fig. 3

EP 1 821 009 B1

**Fig. 4**

**Fig. 5**

**EP 1 821 009 B1**

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19724308 A